# EUROPEAN PATENT APPLICATION

(11) **EP 4 510 780 A1**
(43) Date of publication of application: **19.02.2025**
(21) Application number: 23788091.9
(22) Date of filing: 10.03.2023
(51) Int. Cl.: H05B 47/105, H05B 47/155

(54) **ILLUMINATION CONTROL SYSTEM, AND ILLUMINATION CONTROL METHOD**

(30) Priority: 12.04.2022 JP 2022065839
(71) Applicant: Panasonic Intellectual Property Management Co., Ltd., Kadoma-shi, Osaka 571-0057 (JP)
(72) Inventor: ITOH, Kazuo, Kadoma-shi 571-0057 Osaka (JP)
(74) Representative: Appelt, Christian W.
(86) International application number: PCT/JP2023/009275
(87) International publication number: WO 2023/199669

(57) **Abstract**

A lighting control system (10) includes: an obtainer (55) that obtains control information from a server device (60) by transmitting data to the server device (60), the data being related to (i) a plurality of lighting devices (20) that individually illuminate a plurality of areas (81) that are adjacent to each other and each of which has a lighting environment for which a target value is predetermined and (ii) a plurality of sensors (30) that individually sense detection values of the lighting environments in the plurality of areas (81), the control information being for reducing, for each of the plurality of areas (81), a difference between the target value and a detection value, the detection value being one of the detection values; and a controller (56) that controls the plurality of lighting devices (20) using the control information obtained.

## Description

### [Technical Field]

The present invention relates to a lighting control system and a lighting control method.

### [Background Art]

A technique for controlling a lighting environment in an indoor space is known. Patent literature (PTL) 1 discloses a light-emitting diode (LED) lighting device that includes a tracking function that causes a hue of an LED that is being turned on to change in coordination with a hue of an LED that is already turned on.

### [Citation List]

### [Patent Literature]

[PTL 1] Japanese Unexamined Patent Application Publication No. 2019-106300

### [Summary of Invention]

### [Technical Problem]

The present invention provides a lighting control system or the like that can cause lighting environments in a plurality of areas, in which each of the lighting environments influence one another, to each approach a target.

### [Solution to Problem]

A lighting control system according to one aspect of the present invention includes: an obtainer that obtains control information from an external server device by transmitting data to the external server device, the data being related to (i) a plurality of lighting devices that individually illuminate a plurality of areas that are adjacent to each other and each of which has a lighting environment for which a target value is predetermined and (ii) a plurality of sensors that individually sense detection values of the lighting environments in the plurality of areas, the control information being for reducing, for each of the plurality of areas, a difference between the target value and a detection value, the detection value being one of the detection values; and a controller that controls the plurality of lighting devices using the control information obtained.

A lighting control method according to one aspect of the present invention is a lighting control method executed by a computer, and the lighting control method includes: obtaining control information from an external server device by transmitting data to the external server device, the data being related to (i) a plurality of lighting devices that individually illuminate a plurality of areas that are adjacent to each other and each of which has a lighting environment for which a target value is predetermined and (ii) a plurality of sensors that individually sense detection values of the lighting environments in the plurality of areas, the control information being for reducing, for each of the plurality of areas, a difference between the target value and a detection value, the detection value being one of the detection values; and controlling the plurality of lighting devices using the control information obtained.

### [Advantageous Effects of Invention]

The lighting control system and the like according to one aspect of the present invention can cause lighting environments in a plurality of areas, in which each of the lighting environments influence one another, to each approach a target.

### [Brief Description of Drawings]

[FIG. 1]

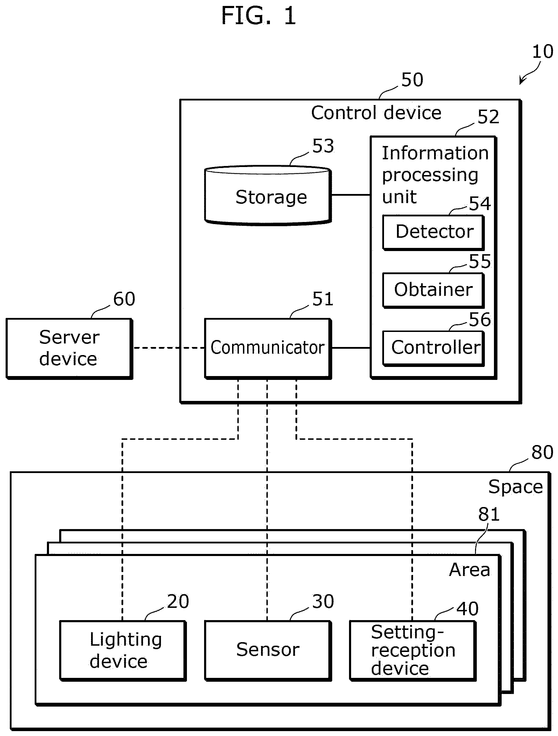

   FIG. 1 is a block diagram of a functional configuration of a lighting control system according to an embodiment.
[FIG. 2]

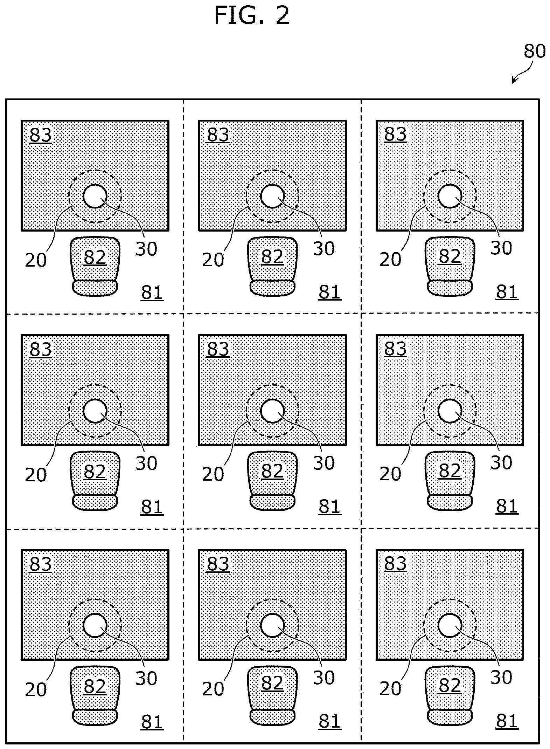

   FIG. 2 is a diagram illustrating a space in which the lighting control system according to the embodiment is applied.
[FIG. 3]

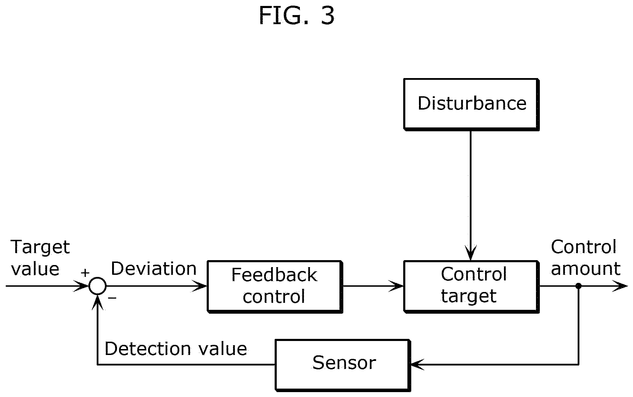

   FIG. 3 is a block diagram illustrating an outline of feedback control.
[FIG. 4]

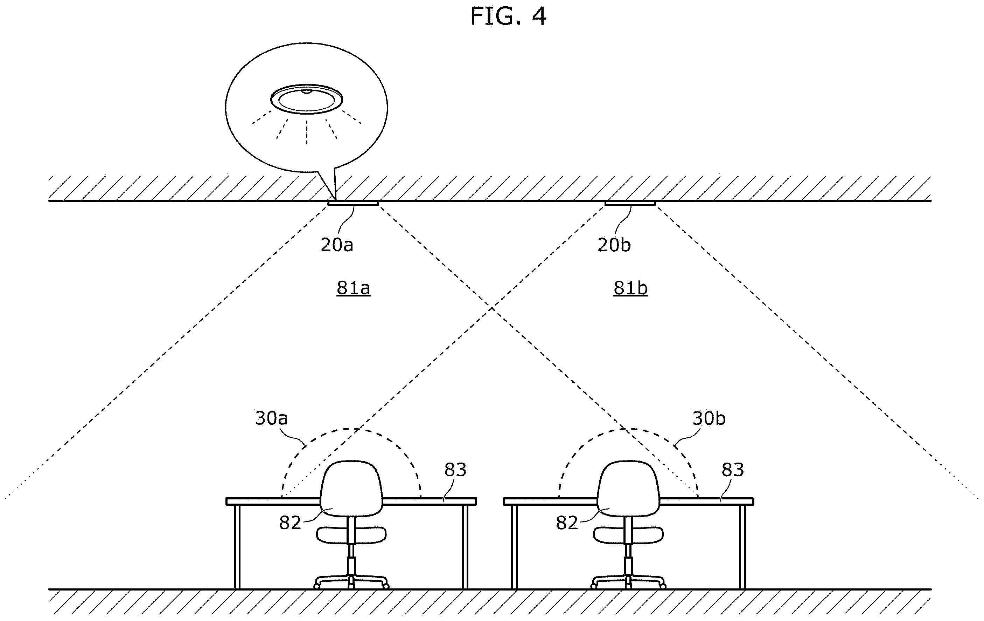

   FIG. 4 is a schematic diagram illustrating a target area and an adjacent area that is adjacent to the target area.
[FIG. 5]

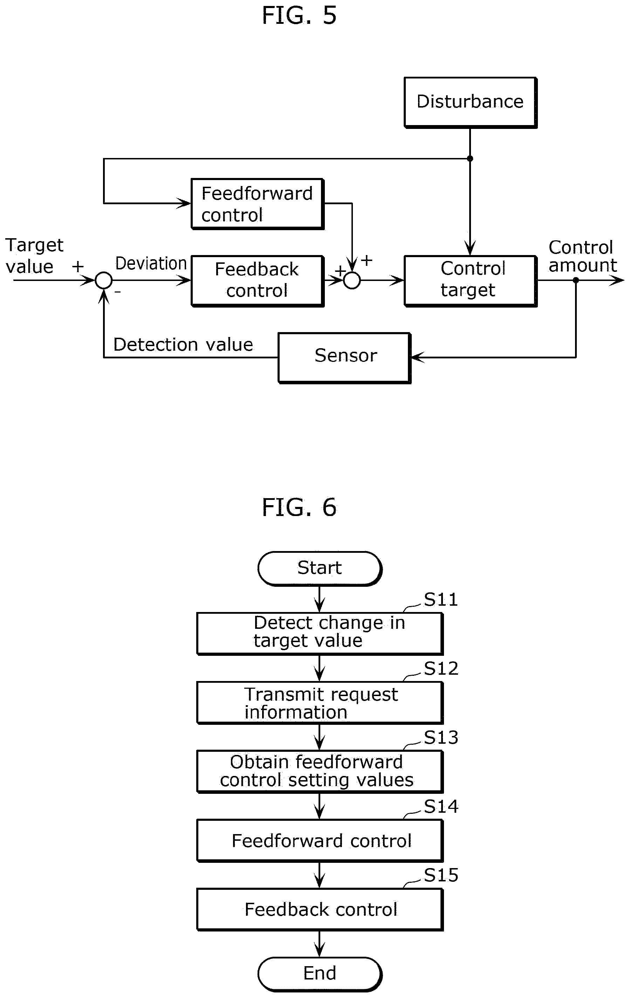

   FIG. 5 is a block diagram illustrating an outline of control of a lighting environment.
[FIG. 6]
   FIG. 6 is a flowchart of Control Example 1 of the lighting environment.
[FIG. 7]

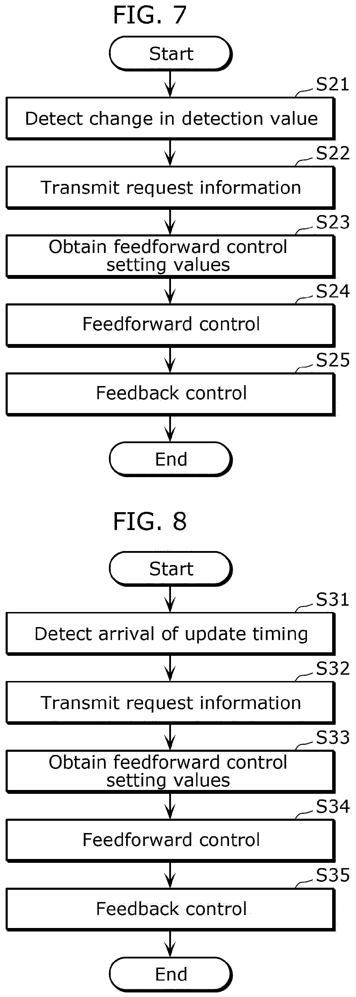

   FIG. 7 is a flowchart of Control Example 2 of the lighting environment.
[FIG. 8]
   FIG. 8 is a flowchart of Control Example 3 of the lighting environment.

### [Description of Embodiments]

Hereinafter, embodiments will be described in detail with reference to the drawings. It should be noted that the embodiments described below merely illustrate general or specific examples of the present disclosure. The numerical values, shapes, materials, elements, the arrangement and connection of the elements, steps, the order of the steps, etc., described in the following embodiments are mere examples, and are therefore not intended to limit the present invention. Accordingly, among elements in the following embodiments, those not appearing in any of the independent claims will be described as optional elements.

It should be noted that the respective figures are schematic diagrams and are not necessarily precise illustrations. Furthermore, in the respective figures, elements that are substantially the same are given the same reference signs, and redundant descriptions may be omitted or simplified.

### (Embodiment)

### [Configuration]

First, a configuration of a lighting control system according to an embodiment will be described. FIG. 1 is a block diagram of a functional configuration of a lighting control system according to an embodiment. FIG. 2 is a diagram (plan view) illustrating a space in which the lighting control system according to the embodiment is applied. It should be noted that, in FIG. 2, lighting devices 20 are indicated by dashed-line circles and sensors 30 are indicated by solid-line circles.

Lighting control system 10 is a system that can individually provide each user disposed in space 80 in a facility with a lighting environment. Space 80 is an indoor space that is not partitioned by walls, for example. Space 80 is a hot-desking-style office space or the like, for example. As illustrated in FIG. 2, space 80 is, for example, divided into a plurality of areas 81 in each of which a seat (chair 82 and desk 83) is provided. The dashed lines (straight lines) in FIG. 2 indicate dividing lines. Although space 80 is divided into a matrix in a top view, for example, the method in which space 80 is divided is not particularly limited.

As illustrated in FIG. 1, lighting control system 10 specifically includes a plurality of lighting devices 20, a plurality of sensors 30, a plurality of setting-reception devices 40, and control device 50. Lighting device 20, sensor 30, and setting-reception device 40 are provided in each of the plurality of areas 81. Furthermore, server device 60 is also illustrated in FIG. 1.

Lighting devices 20 are provided in the ceiling of space 80 and illuminate space 80. Although the light source provided in lighting device 20 is implemented, for example, as a light-emitting diode (LED) element, the light source may be implemented as other light-emitting elements, such as a semiconductor laser, organic electro-luminescence (EL) element, inorganic EL element or the like. Although lighting device 20 is, for example, a down light, lighting device 20 may be a base light, a ceiling light, a spotlight, or the like, and specific aspects of lighting device 20 are not particularly limited. The dimming and color of lighting device 20 is adjustable, and the brightness and color temperature of light emitted by lighting device 20 is controlled by control device 50.

Sensor 30 is an illuminance sensor that detects (senses) the illuminance of area 81 in which sensor 30 is provided. Sensor 30 is provided, for example, on top of desk 83 or the like. Sensor 30 transmits detection value information indicating a detection value that is a detection result of illuminance (also referred to as brightness) to control device 50. Sensor 30 may be a sensor that detects the color temperature of light in area 81.

Setting-reception device 40 is a device for setting, by manual operation, a target value of the lighting environment (brightness, color temperature, and the like) of an area 81 in which a user is disposed. Setting-reception device 40 is, for example, a dedicated remote controller that is in one-to-one correspondence with a corresponding one of lighting devices 20. Setting-reception device 40 transmits target value information indicating the target value set by the user to control device 50. It should be noted that a mobile terminal in which an application program has been installed, and which is a mobile terminal in the user's possession, such as a smartphone or the like can be used as setting-reception device 40 in place of a dedicated remote controller.

Control device 50 is a controller that controls a plurality of lighting devices 20 provided in space 80. Control device 50 is implemented, for example, as an edge server provided in the facility that includes space 80 or as a cloud server or the like provided outside of the facility. Control device 50 specifically includes communicator 51, information processing unit 52, and storage 53.

Communicator 51 is a communication module (communication circuit) for control device 50 for communicating with the plurality of lighting devices 20, the plurality of sensors 30, the plurality of setting-reception devices 40, and server device 60. Although communication performed by communicator 51 is, for example, wired communication, wireless communication may be used. The communication standard used for communication is not particularly limited.

Information processing unit 52 performs information processing related to control of lighting devices 20 in space 80. Although information processing unit 52 is implemented, for example, as a microcomputer, information processing unit 52 may be implemented as a processor.

Information processing unit 52 includes detector 54, obtainer 55, and controller 56 as functional elements. The functionality of detector 54, obtainer 55, and controller 56 is implemented, for example, by a microcomputer that includes information processing unit 52 or a processor or the like executing a computer program stored in storage 53. The functionality of each of detector 54, obtainer 55, and controller 56 will later be described in more detail.

Storage 53 is a storage device in which information necessary for the above-mentioned information processing, a computer program executed by information processing unit 52, and the like are stored. Although storage 53 is implemented, for example, as a hard disk drive (HDD), storage 53 may be implemented as semiconductor memory or the like.

Server device 60 is a computer that provides control device 50 with feedforward control (as described later) setting values. Server device 60 is implemented, for example, as an edge server provided in the facility that includes space 80 or as a cloud server or the like provided outside of the facility. Server device 60 is equipped with a machine learning model, and feedforward control setting values can be determined (calculated) by using the machine learning model. A "machine learning model" as described here has a broad meaning, and machine learning performed by a machine learning model includes various algorithms, such as deep learning and the like. In other words, the specific machine learning algorithms are not particularly limited.

Note that in the following embodiments, although server device 60 is described as an external server device not included in lighting control system 10, server device 60 may be included in lighting control system 10. In other words, lighting control system 10 may include server device 60.

### [Issue of Feedback Control]

As described above, in each of the plurality of areas 81, lighting device 20, sensor 30, and setting-reception device 40 are provided for controlling the lighting environment of the corresponding area 81. Although "lighting environment" specifically refers to brightness, color temperature, and the like, in the following embodiments, cases where lighting environment mainly refers to brightness will be described.

For example, when a brightness target value is set by a setting-reception device 40 provided in a target area 81 among the plurality of areas 81, controller 56 of control device 50 makes it possible to achieve the brightness indicated by the target value in the target area 81 by controlling the lighting device 20 provided in the target area 81. Feedback control can be considered as one method of control for achieving the brightness indicated by the target value. FIG. 3 is a block diagram illustrating an outline of feedback control.

As illustrated in FIG. 3, in feedback control, control device 50 calculates a setting value such that deviation of a detection value of sensor 30, which is provided in the target area 81, from the target value becomes zero (the detection value and the target value become equal), and controls the lighting device 20 provided in the target area 81 based on the setting value calculated. The "setting value" as described here specifically refers to a dimming level (dimming rate).

Here, changes in brightness of the target area 81 influence brightness of an adjacent area 81 and vice versa. FIG. 4 is a schematic diagram illustrating a target area 81 and an adjacent area 81. In FIG. 4, the target area 81 is labeled as area 81a and the adjacent area 81 is labeled as area 81b. In FIG. 4, the detection ranges of sensor 30a and sensor 30b are visualized in the drawing.

As illustrated in FIG. 4, light incident on sensor 30a provided in target area 81a not only includes light emitted by lighting device 20a provided in target area 81a, but light emitted by lighting device 20b provided in adjacent area 81b as well. In the same manner, light incident on sensor 30b provided in adjacent area 81b not only includes light emitted by lighting device 20b provided in adjacent area 81b, but light emitted by lighting device 20a provided in target area 81a as well.

Thus, when feedback control is performed in each of target area 81a and adjacent area 81b, hunting oscillation may occur. Furthermore, a long period of time may be needed for the brightness of each of target area 81a and adjacent area 81b to stabilize.

### [Outline of Lighting Environment Control in the Lighting Control System]

In view of this, control device 50 performs a majority of control using feedforward control that takes into consideration influences caused by changes in target values, disturbances in outside light that is incident, and the like, and inhibits the occurrence of overshoot and oscillatory responses. Furthermore, control device 50 reduces the residual amount of slight deviation between the target value and the detection value by performing feedback control. FIG. 5 is a block diagram illustrating an outline of control of a lighting environment in lighting control system 10. As illustrated in FIG. 5, control device 50 (controller 56) uses feedforward control in combination with feedback control that reduces the deviation between the target value and the detection value of the lighting environment, which is performed after the feedforward control, on each of the plurality of lighting devices 20.

Control device 50 obtains feedforward control setting values from server device 60. Server device 60 is equipped with a machine learning model trained, based on training data provided in advance by control device 50 or the like, on feedforward control setting values for each of the plurality of lighting devices 20.

Here, the above-mentioned training data includes information (a) through information (e) as described below.

(a) Information indicating positions of the plurality of lighting devices 20 and the plurality of sensors 30
(b) Information indicating, for each of the plurality of lighting devices 20, distances between lighting device 20 and each of the plurality of sensors 30
(c) Information indicating, for each of the plurality of lighting devices 20, angles of incidence at which light emitted by lighting device 20 is incident on each of the plurality of sensors 30
(d) Detection values of each of the plurality of sensors 30
(e) Setting values of each of the plurality of lighting devices 20

Information (a) through information (c) is stored (registered), for example, in storage in control device 50 when lighting control system 10 is implemented. Information (d) can be obtained, for example, by obtainer 55 from the plurality of sensors 30. Information (e) indicates the dimming levels at which the plurality of lighting devices 20 are currently emitting light, and is stored in storage 53.

Such training data can allow server device 60 (machine learning model) to learn the detection value of each of the plurality of sensors 30 when the plurality of lighting devices 20 are emitting light in accordance with the setting values (information (e)). Specifically, server device 60 (machine learning model) can output feedforward control setting values for each of the plurality of lighting devices 20.

Here, additional information pertaining to the reason that information (b) and information (c) are included in the training data will be given. Even when the setting value (dimming level) of lighting device 20 is the same, the detection value at sensor 30 may be different depending on the distance from lighting device 20 to sensor 30 and the angle of incidence on sensor 30. For example, brightness at the position of sensor 30 is inversely proportional to the distance from lighting device 20 (light source) to sensor 30 raised to the power of two. The brightness at the position of sensor 30 is cosθ times the brightness if light were to arrive from a vertical direction, where θ is the angle of incidence of light relative to the vertical direction. Information (b) and information (c) are used for training on the correlation between the setting value of lighting device 20 and the positional relationship between lighting device 20 and sensor 30.

Specifically, it should be noted that information (a) are coordinates of the plurality of lighting devices 20 and the plurality of sensors 30 in space 80. With this, information (b) and information (c) can also be calculated from information (a), and in this case, information (b) and information (c) may be omitted. Information (a) through information (c) can, in other words, be referred to as information indicating positional relationships between the plurality of lighting devices 20 and the plurality of sensors 30.

Furthermore, the training data need not include all of information (a) through information (e), and a portion of such information may be omitted as needed. Furthermore, the training data may include information other than information (a) through information (e).

Task lighting and ambient lighting, for example, is employed in space 80, and a case may be considered where lighting devices 20 are task lighting (localized lighting), and where ambient lighting (overall lighting) that illuminates the entirety of space 80 (the entirety of the plurality of areas 81) and is separate from lighting devices 20 is installed in space 80. In this case, information indicating an illumination state (setting values or the like) of the ambient lighting may be included in the training data. Furthermore, weather information for the geographical location at which space 80 (plurality of areas 81) is located may be included in the training data. Specifically, the weather information is information, such as the amount of solar irradiance and the like related to outside light that enters from outside of space 80. In a case where the training data includes the above-mentioned information, the above-mentioned information is also included in the data that is included in the request information described later.

It should be noted that the training data may be data representing a transient state (state where brightness in each of the plurality of areas 81 is unstable, and where target values and detection values are different from each other), and may be data representing a steady state (state where brightness in each of the plurality of areas 81 is stable, and where target values and detection values are equal).

### [Lighting Environment Control Example 1]

Next, control of a lighting environment of lighting control system 10 will described in further detail. FIG. 6 is a flowchart of Control Example 1 of the lighting environment of lighting control system 10.

In a steady state (state where brightness in each of the plurality of areas 81 is stable), detector 54 of control device 50 detects a change in a target value of at least one of the plurality of areas 81 (S11). The change in the target value may, for example, be initiated by manual operation of setting-reception device 40 by a user. It should be noted that the target value need not be changed by the user, and there may, for example, be cases where a change is initiated automatically by schedule information in which target values have been determined in advance.

Obtainer 55, triggered by the change in the target value detected, transmits request information for requesting feedforward control setting values to server device 60 (S12). Specifically, obtainer 55 transmits the request information to server device 60 using communicator 51. Data is included in the request information, and in addition to the above-mentioned information (a) through information (e), the data includes information (f), which are target values of lighting environments (brightnesses) of each of the plurality of areas 81. The data can be said to be data related to the plurality of lighting devices 20 and the plurality of sensors 30. It should be noted that the values of information (d) through information (f) included in the request information are the latest values at the point in time at which the change in the target value is detected.

Here, when the above-mentioned request information is received, server device 60 can calculate, by using the data included in the request information and a machine learning model, feedforward control setting values (dimming levels) for compensating a difference between a respective target value and a respective detection value for each of the plurality of areas 81. Server device 60 transmits the feedforward control setting values calculated for each of the plurality of lighting devices 20 to control device 50.

Communicator 51 of control device 50 receives the feedforward control setting values for each of the plurality of lighting devices 20 as a response to the above-mentioned request information. Obtainer 55 obtains the feedforward control setting values for each of the plurality of lighting devices 20 received by communicator 51 (S13). The feedforward control setting values are an example of control information for reducing a difference between a target value and a detection value in each of the plurality of areas 81.

Next, controller 56 performs feedforward control on each of the plurality of lighting devices 20 using the feedforward control setting values obtained (S14). Furthermore, controller 56 performs feedback control based on deviation of target values and detection values in brightness in each of the plurality of areas 81 (S15). Specifically, controller 56 calculates feedback control setting values based on deviation of target values and detection values in brightness, and performs feedback control on each of the plurality of lighting devices 20 using the setting values calculated.

In this manner, lighting control system 10, triggered by the change in the target value in brightness in at least one of the plurality of areas 81, updates the feedforward control setting values for each of the plurality of lighting devices 20, and then performs feedback control on each of the plurality of lighting devices 20. Accordingly, the occurrence of hunting oscillation and the like can be suppressed, and the brightness of each of the plurality of areas 81 can be made to approach their respective target value with high accuracy.

It should be noted that server device 60 may use data included in the request information as training data. In other words, server device 60 can provide feedforward control setting values to control device 50, while updating the machine learning model.

### [Lighting Environment Control Example 2]

Next, Control Example 2 of the lighting environment of lighting control system 10 will be described. FIG. 7 is a flowchart of Control Example 2 of the lighting environment of lighting control system 10.

In a steady state, detector 54 of control device 50 detects a change in a detection value of at least one of the plurality of areas 81 (S21). The change in the detection value occurs, for example, due to outside light entering space 80 or the like.

Obtainer 55, triggered by the change in the detection value detected, transmits request information for requesting feedforward control setting values to server device 60 (S22). Specifically, obtainer 55 transmits the request information to server device 60 using communicator 51. Data is included in the request information, and the data includes the above-mentioned information (a) through information (f). It should be noted that the values of information (d) through information (f) included in the request information are the latest values at the point in time at which the change in the detection value is detected.

Here, when the above-mentioned request information is received, server device 60 can calculate, by using the data included in the request information and a machine learning model, feedforward control setting values (dimming levels) for compensating a difference between a respective target value and a respective detection value for each of the plurality of areas 81. Server device 60 transmits the feedforward control setting values calculated for each of the plurality of lighting devices 20 to control device 50.

Communicator 51 of control device 50 receives the feedforward control setting values for each of the plurality of lighting devices 20 as a response to the above-mentioned request information. Obtainer 55 obtains the feedforward control setting values for each of the plurality of lighting devices 20 (S23). Specifically, obtainer 55 obtains (receives) feedforward control setting values for each of the plurality lighting devices 20 from server device 60 using communicator 51. The feedforward control setting values are an example of control information.

Next, controller 56 performs feedforward control on each of the plurality of lighting devices 20 using the feedforward control setting values obtained (S24). Furthermore, controller 56 performs feedback control based on deviation of target values and detection values in brightness in each of the plurality of areas 81 (S25). Specifically, controller 56 calculates feedback control setting values based on deviation of target values and detection values in brightness, and performs feedback control on each of the plurality of lighting devices 20 using the setting values calculated.

In this manner, lighting control system 10, triggered by the change in the detection value in brightness in at least one of the plurality of areas 81, updates the feedforward control setting values for each of the plurality of lighting devices 20, and then performs feedback control on each of the plurality of lighting devices 20. Accordingly, the occurrence of hunting oscillation and the like can be suppressed, and the brightness of each of the plurality of areas 81 can be made to approach their respective target value with high accuracy.

It should be noted that server device 60 may use data included in the request information as training data. In other words, server device 60 can provide feedforward control setting values to control device 50, while updating the machine learning model.

### [Lighting Environment Control Example 3]

Next, Control Example 3 of the lighting environment of lighting control system 10 will be described. FIG. 8 is a flowchart of Control Example 3 of the lighting environment of lighting control system 10.

In Control Example 3, a feedforward control setting value is periodically updated at an update timing that arrives at a predetermined interval of time. Detector 54 of control device 50 detects that an update timing has arrived (S31). It should be noted that the predetermined interval of time may be determined as needed based on experience or by way of experiment.

Obtainer 55, triggered by the arrival of the update timing detected, transmits request information for requesting feedforward control setting values to server device 60 (S32). Specifically, obtainer 55 transmits the request information to server device 60 using communicator 51. Data is included in the request information, and the data includes the above-mentioned information (a) through information (f). It should be noted that the values of information (d) through information (f) included in the request information are the latest values at the point in time at which the arrival of the update timing is detected.

Here, when the above-mentioned request information is received, server device 60 can calculate, by using the data included in the request information and a machine learning model, feedforward control setting values (dimming levels) for compensating a difference between a respective target value and a respective detection value for each of the plurality of areas 81. Server device 60 transmits the feedforward control setting values calculated for each of the plurality of lighting devices 20 to control device 50.

Communicator 51 of control device 50 receives the feedforward control setting values for each of the plurality of lighting devices 20 as a response to the above-mentioned request information. Obtainer 55 obtains the feedforward control setting values for each of the plurality of lighting devices 20 (S33). Specifically, obtainer 55 obtains (receives) feedforward control setting values for each of the plurality lighting devices 20 from server device 60 using communicator 51. The feedforward control setting values are an example of control information.

Next, controller 56 performs feedforward control on each of the plurality of lighting devices 20 using the feedforward control setting values obtained (S34). Furthermore, controller 56 performs feedback control based on deviation of target values and detection values in brightness in each of the plurality of areas 81 (S35). Specifically, controller 56 calculates feedback control setting values based on deviation of target values and detection values in brightness, and performs feedback control on each of the plurality of lighting devices 20 using the setting values calculated.

In this manner, lighting control system 10, triggered by the arrival of the update timing, updates the feedforward control setting values for each of the plurality of lighting devices 20, and then performs feedback control on each of the plurality of lighting devices 20. Accordingly, the occurrence of hunting oscillation and the like can be suppressed, and the brightness of each of the plurality of areas 81 can be made to approach their respective target value with high accuracy.

It should be noted that server device 60 may use data included in the request information as training data. In other words, server device 60 can provide feedforward control setting values to control device 50, while updating the machine learning model.

### [Training Mode Operation]

Furthermore, lighting control system 10 may perform training mode operation for providing server device 60 with training data. Training mode operation is, in other words, operation for generating training data. In training mode, lighting control system 10 operates as follows, for example.

Controller 56 of control device 50 selects one of the plurality of lighting devices 20 as a target lighting device. Controller 56 causes the target lighting device to illuminate at a first setting value (dimming level of 50 percent, for example), and causes non-target lighting devices (all lighting devices 20 other than the target lighting device) to illuminate at a second setting value (dimming level of 20 percent, for example). In this state, controller 56 generates training data (data that includes the above-mentioned information (a) through information (e)).

Controller 56 then switches the target lighting device among the plurality of lighting devices 20 and repeats the above-mentioned operation. After each and every one of the plurality of lighting devices 20 has been selected once as a target lighting device, the training mode operation comes to an end. It should be noted that controller 56 may change at least one of the first setting value or the second setting value and may further repeat the training mode operation. Training data generated during the training mode operation is provided to server device 60 from control device 50 as needed.

In this manner, lighting control system 10 can enhance the variation of the training data by obtaining detection values of each of the plurality of sensors 30 when setting values of each of the plurality of lighting devices 20 have been forcibly changed.

Note that, in the training mode operation, the order in which each of the plurality of lighting devices 20 are selected as a target lighting device is not particularly limited. When the plurality of lighting devices 20 are arranged in a matrix as illustrated in FIG. 2, the lighting device 20 in the center may be selected as the first target lighting device, and alternatively, a lighting device 20 at a corner may be selected as the first target lighting device.

Server device 60 (machine learning model) may learn feedforward control setting values not only by using training data based on a lighting state of space 80, but by further using training data based on a lighting state of another space as well. For example, when space 80 (plurality of areas 81) is provided on a first floor of a facility, server device 60 may collect training data based on a lighting state in a second floor (other space) of the same facility in addition to training data based on a lighting state in the first floor (space 80). The second floor is a floor that is different from the first floor. Server device 60 may collect training data based on lighting states of three or more floors.

In this manner, server device 60 can improve the accuracy of calculating feedforward control setting values by collecting training data based on lighting states in two or more floors in the same facility.

Furthermore, for example, when space 80 (plurality of areas 81) is provided in a first facility, server device 60 may collect training data based on a lighting state in a second facility (other space) in addition to training data based on a lighting state in the first facility (space 80). The second facility is a facility that is different from the first facility. Server device 60 may collect training data based on lighting states of three or more facilities.

In this manner, server device 60 can improve the accuracy of calculating feedforward control setting values by collecting training data based on lighting states in each of two or more facilities.

### [Variations]

In the above embodiment, although an example in which brightness is controlled for each of the plurality of areas 81 is described, color temperature, light distribution, or the like can be controlled in place of brightness. Lighting control system 10 can be applied to the control of a lighting environment that includes at least one of brightness, color temperature, light distribution, and the like.

Furthermore, the arrangement of the plurality of lighting devices 20 and the arrangement of the plurality of sensors 30 in the above embodiment are given as examples. The plurality of lighting devices 20 may be placed in any arrangement as long as each of the plurality of areas 81 that are adjacent to each other can be individually illuminated. Furthermore, the plurality of sensors 30 may be placed in any arrangement as long as sensing of detection values in each of the lighting environments in the plurality of areas 81 can be performed.

Furthermore, in the above embodiment, although target values of the lighting environments in each of the plurality of areas 81 are set (changed) by a user disposed in space 80, the user need not set the target values. For example, the target values may be set by an administrator or the like disposed outside of the space. Furthermore, the target values may be automatically changed based on schedule information determined in advance.

### [Advantageous Effects, Etc.]

As described above, lighting control system 10 according to one aspect of the present invention includes: obtainer 55 that obtains control information from server device 60 by transmitting data to server device 60, the data being related to (i) a plurality of lighting devices 20 that individually illuminate a plurality of areas 81 that are adjacent to each other and each of which has a lighting environment for which a target value is predetermined and (ii) a plurality of sensors 30 that individually sense detection values of the lighting environments in the plurality of areas 81, the control information being for reducing, for each of the plurality of areas 81, a difference between the target value and a detection value, the detection value being one of the detection values; and controller 56 that controls the plurality of lighting devices 20 using the control information obtained.

Such a lighting control system 10 can cause the plurality of areas 81, in which each of the lighting environments influence one another, to each approach a target.

Furthermore, for example, controller 56 uses feedforward control and feedback control in combination with each other for each of the plurality of lighting devices 20, and the control information is information indicating a feedforward control setting value for each of the plurality of lighting devices 20.

Such a lighting control system 10 can perform a majority of control using feedforward control, and can reduce the residual amount of slight deviation between the target value and the detection value by performing feedback control. Lighting control system 10 can inhibit the occurrence of hunting oscillation and the like.

Furthermore, for example, the data includes information indicating positional relationships between the plurality of lighting devices 20 and the plurality of sensors 30.

Such a lighting control system 10 can obtain control information that takes into consideration the positional relationships between the plurality of lighting devices 20 and the plurality of sensors 30. In other words, lighting control system 10 can control the plurality of lighting devices 20 while taking into consideration the positional relationships between the plurality of lighting devices 20 and the plurality of sensors 30.

Furthermore, for example, the information indicating the positional relationships includes (i) information indicating, for each of the plurality of lighting devices 20, distances between lighting device 20 and each of the plurality of sensors 30, and (ii) information indicating, for each of the plurality of lighting devices 20, angles of incidence at which light emitted by lighting device 20 is incident on each of the plurality of sensors 30.

Such a lighting control system 10 can obtain control information that takes into consideration the above-mentioned distances and the above-mentioned angles of incidence. In other words, lighting control system 10 can control a plurality of lighting devices 20 while taking into consideration the above-mentioned distances and the above-mentioned angles of incidence.

Furthermore, for example, obtainer 55, triggered by a change in the target value in at least one of the plurality of areas 81, obtains the control information from server device 60 by transmitting the data to server device 60.

Such a lighting control system 10 can obtain (update) control information upon being triggered by a change in the target value of a lighting environment.

Furthermore, for example, obtainer 55, triggered by a change in the detection value in at least one of the plurality of areas 81, obtains the control information from server device 60 by transmitting the data to server device 60.

Such a lighting control system 10 can obtain (update) control information upon being triggered by a change in the detection value of a lighting environment.

Furthermore, for example, obtainer 55 obtains the control information from server device 60 by transmitting the data to server device 60 at a predetermined interval of time.

Such a lighting control system 10 can obtain (update) control information at a predetermined interval of time.

Furthermore, for example, the data includes at least one of information indicating an illumination state of overall lighting illuminating an entirety of the plurality of areas 81 or weather information for a geographical location at which the plurality of areas 81 are located.

Such a lighting control system 10 can obtain control information that takes into consideration at least one of an illumination state of overall lighting or weather information. In other words, lighting control system 10 can control a plurality of lighting devices 20 while taking into consideration at least one of an illumination state of overall lighting or weather information.

Furthermore, for example, server device 60 includes a machine learning model that outputs the control information based on the data received. Lighting control system 10, in operation of a training mode for providing training data to the machine learning model, generates training data by repeatedly performing control to cause a target lighting device among the plurality of lighting devices 20 to emit light at a setting value different from a setting value of each of a remainder of the plurality of lighting devices 20, while switching the target lighting device among the plurality of lighting devices 20.

Such a lighting control system 10 can increase the variation of the training data.

Furthermore, for example, the plurality of areas 81 are provided on a first floor of a facility. Server device 60 collects training data based on a lighting state in a second floor of the facility in addition to training data based on a lighting state in the first floor.

Such a server device 60 can improve accuracy of control information by collecting training data based on lighting states of a plurality of floors in the same facility.

Furthermore, for example, the plurality of areas 81 are provided in a first facility. Server device 60 collects training data based on a lighting state in a second facility in addition to training data based on a lighting state in the first facility.

Such a server device 60 can improve accuracy of control information by collecting training data based on the lighting state of each of a plurality of spaces in a plurality of facilities.

Furthermore, lighting control method 10, and the like, executed by a computer includes: obtaining control information from server device 60 by transmitting data to server device 60, the data being related to (i) a plurality of lighting devices 20 that individually illuminate a plurality of areas 81 that are adjacent to each other and each of which has a lighting environment for which a target value is predetermined and (ii) a plurality of sensors 30 that individually sense detection values of the lighting environments in the plurality of areas 81, the control information being for reducing, for each of the plurality of areas 81, a difference between the target value and a detection value, the detection value being one of the detection values; and controlling the plurality of lighting devices 20 using the control information obtained.

Such a lighting control method can cause lighting environments in the plurality of areas 81, in which each of the lighting environments influence one another, to each approach a target.

### (Other Embodiments)

Although an embodiment has been described above, the present invention is not limited to the above embodiment.

For example, in the above embodiment, the lighting control system is implemented by a plurality of devices. In this case, the elements (in particular, the functional elements) included in the lighting control system may be assigned in any manner to a plurality of devices. Furthermore, the lighting control system may be implemented as a single device. For example, the lighting control system may be implemented as a single device equivalent to the control device.

Furthermore, the order of the processes described in the above embodiment are merely an example. The order of the plurality of processes may be changed, and the plurality of processes may be executed in parallel with each other. Furthermore, processes to be executed by a certain processor may be performed by another processor.

Furthermore, in the above embodiment, each element may be implemented by executing a software program suitable for each element. Each element may be implemented by a program executing component, such as a central processing unit (CPU) or processor, reading out and executing the software program recorded in a recording medium, such as a hard disk or semiconductor memory.

Furthermore, each element may be implemented as hardware. For example, each element may be a circuit (or an integrated circuit). Such circuits may be consolidated as a single circuit, and may be configured as individual circuits. Furthermore, such circuits may each be a general-purpose circuit or a dedicated circuit.

Furthermore, general and specific aspects of the present invention may be implemented as a system, a device, a method, an integrated circuit, a computer program, or a computer-readable recording medium such as a CD-ROM. Furthermore, general and specific aspects of the present invention may be implemented as any combination of a system, a device, a method, an integrated circuit, a computer program, or a recording medium. For example, the present invention may be implemented as a lighting control method executed by a computer, such as a lighting control system or the like, and may be implemented as a program for causing a computer to execute such a lighting control method. Furthermore, the present invention may be implemented as a non-transitory computer-readable recording medium having recorded thereon such a program.

Forms obtained through various modifications to each of the foregoing embodiments that may be conceived by those skilled in the art, as well as forms realized by combining elements and functions in each of the foregoing embodiments without departing from the essence of the present invention are included within the scope of the present invention.

### [Reference Signs List]

10 lighting control system
20, 20a, 20b lighting device
30, 30a, 30b sensor
40 setting-reception device
50 control device
51 communicator
52 information processing unit
53 storage
54 detector
55 obtainer
56 controller
60 server device (external server device)
80 space
81 area
81a target area
81b adjacent area
82 chair
83 desk

## Claims

1. A lighting control system comprising:
an obtainer that obtains control information from a server device by transmitting data to the server device, the data being related to (i) a plurality of lighting devices that individually illuminate a plurality of areas that are adjacent to each other and each of which has a lighting environment for which a target value is predetermined and (ii) a plurality of sensors that individually sense detection values of the lighting environments in the plurality of areas, the control information being for reducing, for each of the plurality of areas, a difference between the target value and a detection value, the detection value being one of the detection values; and
a controller that controls the plurality of lighting devices using the control information obtained.

2. The lighting control system according to claim 1, wherein
the controller uses feedforward control and feedback control in combination with each other for each of the plurality of lighting devices, and
the control information is information indicating a feedforward control setting value for each of the plurality of lighting devices.

3. The lighting control system according to claim 1, wherein
the data includes information indicating positional relationships between the plurality of lighting devices and the plurality of sensors.

4. The lighting control system according to claim 3, wherein
the information indicating the positional relationships includes (i) information indicating, for each of the plurality of lighting devices, distances between the lighting device and each of the plurality of sensors, and (ii) information indicating, for each of the plurality of lighting devices, angles of incidence at which light emitted by the lighting device is incident on each of the plurality of sensors.

5. The lighting control system according to any one of claims 1 to 4, wherein
the obtainer, triggered by a change in the target value in at least one of the plurality of areas, obtains the control information from the server device by transmitting the data to the server device.

6. The lighting control system according to any one of claims 1 to 4, wherein
the obtainer, triggered by a change in the detection value in at least one of the plurality of areas, obtains the control information from the server device by transmitting the data to the server device.

7. The lighting control system according to any one of claims 1 to 4, wherein
the obtainer obtains the control information from the server device by transmitting the data to the server device at a predetermined interval of time.

8. The lighting control system according to any one of claims 1 to 4, wherein
the data includes at least one of information indicating an illumination state of overall lighting illuminating an entirety of the plurality of areas or weather information for a geographical location at which the plurality of areas are located.

9. The lighting control system according to any one of claims 1 to 4, wherein
the server device includes a machine learning model that outputs the control information based on the data received, and
the lighting control system, in operation of a training mode for providing training data to the machine learning model, generates training data by repeatedly performing control to cause a target lighting device among the plurality of lighting devices to emit light at a setting value different from a setting value of each of a remainder of the plurality of lighting devices, while switching the target lighting device among the plurality of lighting devices.

10. The lighting control system according to claim 9, wherein
the plurality of areas are provided on a first floor of a facility, and
the server device collects training data based on a lighting state in a second floor of the facility in addition to training data based on a lighting state in the first floor.

11. The lighting control system according to claim 9, wherein
the plurality of areas are provided in a first facility, and
the server device collects training data based on a lighting state in a second facility in addition to training data based on a lighting state in the first facility.

12. A lighting control method executed by a computer, the lighting control method comprising:
obtaining control information from a server device by transmitting data to the server device, the data being related to (i) a plurality of lighting devices that individually illuminate a plurality of areas that are adjacent to each other and each of which has a lighting environment for which a target value is predetermined and (ii) a plurality of sensors that individually sense detection values of the lighting environments in the plurality of areas, the control information being for reducing, for each of the plurality of areas, a difference between the target value and a detection value, the detection value being one of the detection values; and
controlling the plurality of lighting devices using the control information obtained.
